(19) Europäisches Patentamt
European Patent Office
Office européen des brevets

(11) Veröffentlichungsnummer: **0 015 557**
**B1**

(12) # EUROPÄISCHE PATENTSCHRIFT

(45) Veröffentlichungstag der Patentschrift: **19.01.83**

(51) Int. Cl.³: **C 09 B 67/36,** D 06 P 1/12

(21) Anmeldenummer: **80101138.8**

(22) Anmeldetag: **06.03.80**

(54) **Wässrige Dispersionen von primären aromatischen Aminen und ihre Verwendung zur Erzeugung von wasserunlöslichen Azofarbstoffen auf der Faser sowie Verwendung eines anionaktiven Tensides zur Herstellung dieser Dispersionen.**

(30) Priorität: **12.03.79 DE 2909639**

(43) Veröffentlichungstag der Anmeldung:
**17.09.80 Patentblatt 80/19**

(45) Bekanntmachung des Hinweises auf die Patenterteilung:
**19.01.83 Patentblatt 83/3**

(84) Benannte Vertragsstaaten:
**CH DE FR IT**

(56) Entgegenhaltungen:
**FR-A-1 475 370**
**FR-A-2 223 075**
**GB-A-635 600**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt/Main 80 (DE)**

(72) Erfinder: **Hertel, Hasso, Dr., Brunnenweg 10, D-6052 Mühlheim/Main (DE)**

**EP 0 015 557 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Wäßrige Dispersionen von primären aromatischen Aminen und ihre Verwendung zur Erzeugung von wasserunlöslichen Azofarbstoffen auf der Faser sowie Verwendung eines anionaktiven Tensides zur Herstellung dieser Dispersionen

Die vorliegende Erfindung liegt auf dem Gebiet der wäßrigen Dispersionen von primären aromatischen Aminen, die bevorzugt zur Erzeugung von wasserunlöslichen Azofarbstoffen auf der Faser, insbesondere in der Eisfarbentechnik, eingesetzt werden.

In der Deutschen Offenlegungsschrift 23 14 938 werden stabile, lagerfähige, wäßrige Dispersionen von primären aromatischen Aminen beschrieben, die dadurch gekennzeichnet sind, daß sie als Dispergiermittel ein wasserlösliches Kondensationsprodukt mit einem oder mehreren Resten von oxalkylierten hydroxy- und/oder carboxyhaltigen aromatischen Verbindungen enthalten, wobei diese oxalkylierten aromatischen Reste durch Methylenbrücken direkt oder unter Zwischenschaltung von Resten aromatischer Verbindungen miteinander verbunden sind. Die Dispersionen können zusätzlich einen mehrwertigen Alkohol enthalten. Diese bekannten Dispersionen haben jedoch bezüglich der Feinverteilung des primären aromatischen Amins und der Viskosität der wäßrigen Dispersionen in einigen Punkten noch gewisse Nachteile. So zeigen solche wäßrigen Dispersionen von einigen Aminen im Temperaturbereich von 40 bis 50°C eine stark erhöhte Viskosität bis zur salbenartigen Konsistenz. Dies bringt Nachteile bei der Herstellung mit sich und führt zu Störungen im Produktionsablauf.

Mit der vorliegenden Erfindung wurden nunmehr stabile, lagerfähige, wäßrige Dispersionen von primären aromatischen Aminen, die das obengenannte Dispergiermittel und gegebenenfalls einen mehrwertigen Alkohol enthalten, gefunden, die diese Nachteile nicht mehr besitzen. Sie zeigen vielmehr ein besseres Viskositätsverhalten und darüber hinaus eine bessere Feinverteilung des aromatischen Amins und zeichnen sich durch eine gute Lagerfähigkeit und Beständigkeit im Temperaturbereich von etwa −15°C bis etwa +50°C aus; sie sind weiterhin einfach und rasch diazotierbar und geben schaumarme, rückstandsfreie Diazoniumsalzlösungen von sehr guter Haltbarkeit und Verwendungsfähigkeit für die verschiedenen Arten der Farbstoffbereitung. Die unter Verwendung der diazotierten erfindungsgemäßen Dispersionen hergestellten Färbungen zeichnen sich durch Gleichmäßigkeit und gute Echtheiten aus.

Dieses verbesserten Dispersionen sind durch den Gehalt eines anionaktiven Tensides und gegebenenfalls eines Polyglykols gekennzeichnet.

Die vorliegende Erfindung betrifft somit stabile, lagerfähige, wäßrige Dispersionen von primären, keine Carbonsäure- oder Sulfonsäuregruppen enthaltenden aromatischen Aminen, die als Dispergiermittel ein wasserlösliches Konensationsprodukt enthalten, das einen oder mehrere, wie zwei bis sechs, Reste von oxalkylierten hydroxy- und/oder carboxyhaltigen aromatischen Verbindungen besitzt, wobei diese oxalkylierten aromatischen Reste durch Methylenbrücken direkt oder unter Zwischenschaltung von Resten aromatischer Verbindungen miteinander verbunden sind, und gegebenenfalls einen mehrwertigen Alkohol enthalten und die durch den Gehalt eines anionaktiven Tensides, das vorzugsweise zwei oder mehr Sulfogruppen im Molekül enthält, und gegebenenfalls durch den Gehalt eines hochmolekularen Polyglykols gekennzeichnet sind.

Die vorteilhaften Eigenschaften der erfindungsgemäßen Dispersionen zeigen sich auch noch bei einer Konzentration an primärem aromatischem Amin in der Dispersion von mindestens 30 Gew.-%. In der Regel werden die erfindungsgemäßen Dispersionen im Hinblick auf ihre technische Verwendung zur Herstellung von Entwicklungsbädern, Druckpasten und Klotzflotten auf eine Konzentration von 35 bis 70 Gew.-% eingestellt.

Das in den Dispersionen erfindungsgemäß enthaltene anionaktive Tensid liegt darin vorteilhaft in Mengen von 0,3 bis 8 Gew.-%, vorzugsweise von 0,8 bis 2 Gew.-%, bezogen auf die Dispersion, vor.

Anionaktive Tenside, die erfindungsgemäß in den Dispersionen enthalten sind, sind bespielsweise Fettsäuren, Fettsäure-sarkoside, Fettsäure-isothionate, Fettsäure-lactylate, Alkylmalonate, Alkylsuccinate, Eiweiß-Fettsäure-Kondensate, Alkylsulfonate, Fettsäure-tauride, Fettsäure-methyltauride, Fettsäure-sulfonate, Sulfobernsteinsäureester, Alkylbenzolsulfonate, Alkylnaphthalinsulfonate, sulfatierte Alkohole, sulfatierte Fettsäure, sulfatierte Polyglykoläther, sulfatierte Fettsäureester, sulfatierte Fettsäureamide, Alkylsulfonyl-aminocarbonsäure, Ligninsulfonate, sulfonierte Phenol-Formaldehyd-Harze, wobei unter dem Begriff ›Phenol‹ phenolische aromatische Verbindungen, wie beispielsweise Phenol, Kresol, Methoxyphenol und Naphthol, zu verstehen sind, des weiteren sulfonierte Phenol-Formaldehyd-Naphthalinsulfonsäure-Harze, Kondensationsprodukte aus Naphthalinsulfonsäuren und Formaldehyd sowie Polyvinylacetalsulfonate.

Bevorzugt sind als anionaktive Tenside in den erfindungsgemäßen Dispersionen Ligninsulfonate mit einem mittleren Molekulargewicht von etwa 5000 bis 100 000, sulfogruppenhaltige Phenol- oder Kresol-Formaldehyd-Addukt (Harze) mit bevorzugt durchschnittlich 0,3 bis 2 Sulfogruppen pro aromatischen Rest sowie Naphthalinsulfonsäure-Formaldehyd-Kondensate vom Dinaphthylmethan-Typ.

Dispergiermittel und anionaktive Tenside der oben beschriebenen Art sind in der Literatur wohlbekannt.

Höhermolekulare Polyglykole, die in den erfindungsgemäßen Dispersionen enthalten sein können und dazu dienen, die Viskosität der Dispersion gewünschtenfalls zu erhöhen, sind bevorzugt Polyäthylenglykole mit einem Molekulargewicht von 4000 bis 100 000, insbesondere von 8000 bis 30 000.

Sie sind ohne Einfluß auf die Feinverteilung des Amins in der Dispersion und auf das Viskositätsverhalten der Dispersion bei erhöhter Temperatur. Sie sind in den Dispersionen zu 0,5 bis 15 Gew.-%, bevorzugt 1 bis 5 Gew.-%, enthalten.

Mehrwertige Alkohole, die in den erfindungsgemäßen Dispersionen enthalten sein können, sind insbesondere niedere Alkan-diole oder -triole, vorzugsweise von 2 bis 5 C-Atomen, wie Äthylenglykol, Propylenglykol, Butylenglykol oder Glycerin.

Als Dispergiermittel enthalten die erfindungsgemäßen Dispersionen bevorzugt wasserlösliche aromatische Formaldehyd-Kondensationsprodukte, die über Methylenbrücken verbundene aromatische Reste und daran gebunden mindestens eine oxalkylierte Hydroxy- und/oder Carboxygruppe mit einer endständigen Hydroxy- oder niederen Alkyläthergruppe aufweisen. Insbesondere sind solche Dispergiermittel wasserlösliche Kondensationsprodukte, die durch Reaktion einer phenolischen, ggf. verätherten, aromatischen Verbindung oder eines aromatischen Kohlenwasserstoffes, der mit Formaldehyd reagieren kann, wie bspw. aus der unten bezeichneten Gruppe (A), mit Formaldehyd und einem wasserlöslichen Anlagerungsprodukt von 8 bis 50 Mol Alkylenoxid, vorzugsweise Äthylenoxid oder Propylenoxid, an 1 Mol einer aromatischen, phenolische Hydroxygruppe enthaltenden Verbindung, wie bspw. aus der unten bezeichneten Gruppe (B), in Gegenwart eines sauren Katalysators und gegebenenfalls nachfolgender Alkylierung hergestellt worden sind, wobei die Verbindungen aus der Gruppe (A) Phenol, Kresol, Xylenol, Resorcin, Butylphenol, Chlorphenol, Naphthol, Methylnaphthol, 4,4'-Dihydroxydiphenyl, Anisol, Xylol, Mesitylen, Naphthalin und Anlagerungsprodukte von 2 bis 50 Mol Äthylenoxid an 1 Mol einer Phenol-Verbindung sind und die Verbindungen aus der Gruppe (B) ein- oder zweiwertige Phenol-Verbindungen, Naphthole, 4,4'-Dihydroxy-diphenyl, Methylen-di-$\beta$-naphthol und 2,2'-Dihydroxydiphenylpropan darstellen.

Als Dispergiermittel sind hervorzuheben die Kondensationsprodukte, die durch Reaktion aus einer Phenol-Verbindung, vorzugsweise Phenol oder Kresol, einem Phenolpolyglykoläther und Formaldehyd erhalten werden und deren noch freie Hydroxygruppen ganz oder teilweise alkyliert sein können, wobei insbesondere die phenolischen Reste des Kondensationsproduktes durch eine Methyl- oder eine Äthylgruppe substituiert sein können. — Besonders bevorzugt sind solche wasserlöslichen Dispergiermittel, die durch saure Kondensation von 1 Mol Phenol, 2 Mol Formaldehyd und etwa 1 Mol der Anlagerungsverbindung von 10 bis 30 Mol Äthylenoxid an 1 Mol Phenol oder Naphthol und anschließende Umsetzung mit Dimethylsulfat oder Diäthylsulfat erhalten werden.

Insbesondere bevorzugt sind Dispergiermittel der allgemeinen Formel (1)

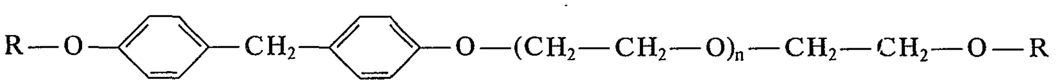

(1)

in welcher R für ein Wasserstoffatom oder für die Methyl- oder Äthylgruppe steht und n eine ganze Zahl zwischen 8 und 50 bedeutet.

Die Herstellung der erfindungsgemäßen wäßrigen Dispersionen erfolgt zweckmäßig in der Weise, daß man das primäre aromatische Amin mit dem oben bezeichneten Dispergiermittel und gegebenenfalls mit einem mehrwertigen Alkohol sowie mit dem anionaktiven Tensid vermischt und zu einem Teig verarbeitet. Man geht dabei entweder von den pulverförmigen Aminen oder von den bei der technischen Herstellung der Amine anfallenden Filterkuchen aus, die im Durchschnitt etwa 15–25 Gew.-% Wasser enthalten. Dieser Filterkuchen wird mit etwa 5–40 Gew.-% des Dispergiermittels, vorzugsweise mit 15–20 Gew.-% des Dispergiermittels (jeweils berechnet auf reines Amin), und mit dem anionaktiven Tensid sowie gegebenenfalls mit einem mehrwertigen Alkohol verrührt. Das aromatische Amin setzt man hierbei im Hinblick auf die oben erwähnte technische Verwendung in solchen Mengen ein, daß der Gehalt des Amins in der Dispersion 30 oder mehr als 30 Gew.-%, vorzugsweise 40 bis 65 Gew.-% ist. Der mehrwertige Alkohol, der gegebenenfalls in den erfindungsgemäßen Dispersionen enthalten sein kann, wird in Mengen von bis etwa 20 Gew.-% eingesetzt.

Die so erhaltenen Teige werden dann einer Feinverteilung des primären aromatischen Amins unterworfen, wobei niedrig viskose Dispersionen entstehen. Die Feinverteilung kann z. Bsp. durch eine Kugelmahlung erzielt werden. Diese kann in üblicher Weise in einer mit Kugeln gefüllten Rollmühle durchgeführt werden. Man kann jedoch auch in einer Schwingmühle arbeiten, wobei wesentlich kürzere Mahlzeiten ausreichen. Besonders geeignet sind Rührwerkskugelmühlen oder auch eine mit Ottawa-Sand gefüllte Sandmühle. Derartige Mahlapparate ergeben bei hohen Durchsätzen eine sehr gute Feinverteilung. Den Dispersionen können zur Erzielung eines besonderen Effekts vor, während oder nach der Feinverteilung andere Stoffe zugesetzt werden. So kann, falls erwünscht, mittels eines Polyglykols mit einem Molekulargewicht von 4000 bis 100 000 die Viskosität der Dispersion erhöht werden oder mittels eines Entschäumers die Neigung zum Schäumen mancher anionaktiver Tenside unterdrückt werden.

Bei der Bereitung der erfindungsgemäßen Dispersionen können außerdem geringe Mengen an Fungiziden, beispielsweise Pentachlorphenol-Natrium, zugegeben werden, um eine Schimmelpilzbildung während einer längeren Lagerung der Dispersion zu vermeiden.

Die Feinverteilung von Dispersionen kann prinzipiell durch Sedimentationsanalysen, die absolute Werte liefern, gemessen werden. Wegen der im Vergleich zu wasserunlöslichen Farbstoffen, bei denen

diese Messung praktiziert wird, sehr großen Löslichkeit der hier verwendeten Amine ist dies mit entsprechenden Fehlern verbunden, so daß sich dieses aufwendige Meßverfahren hier nicht empfiehlt. Man verwendet zweckmäßig den sogenannten Fließtest (s. z. Bsp. H. Leube und H. Uhrig, Textilveredlung 9, 97—106 (1974)), der trotz der einfachen und raschen Durchführung sehr differenzierte Aussagen über die Feinverteilung gibt. — Zur Messung der Feinverteilung in der Dispersion verdünnt man die Dispersion mit destilliertem Wasser auf einen Gehalt des primären aromatischen Amins von etwa 1 Gew.-% und gibt von dieser Verdünnung einen Milliliter auf die Mitte eines Rundfilters, das auf einem Becherglas von nur wenig kleinerem Durchmesser liegt. Die Probe wird von Filterpapier ganz oder zum größten Teil aufgesaugt; der Rest tropft von der Filtermittel ab. Sind die Einzelteilchen der Dispersion deutlich kleiner als die Filterporen, läuft die Probe wie eine echte Lösung aus; falls das Amin farbig ist, entsteht eine nahezu gleichmäßig gefärbte Kreisfläche. Sind die Einzelteilchen der Dispersion größer als die Filterporen, werden sie an der Aufgabestelle abfiltriert und sind als Zentralfleck sichtbar; im Filter wandert nur die vom Farbstoff freie flüssige Phase. Liegt die Feinverteilung zwischen diesen beiden Extremen, dann werden die feineren Feststoffteilchen von der wandernden flüssigen Phasen je nach ihrer Größe mehr oder weniger weit mitgenommen, — man spricht hier von einem mehr oder weniger großen Auslauf, — während die groben Teilchen an der Aufgabestelle bleiben, wodurch sich mehr oder weniger starke Zonen an auslaufender Lösung und mehr oder weniger stark zurückbleibenden Teilchen ausbilden. Sehr wichtig ist hierbei natürlich die Porosität des verwendeten Filterpapiers, obgleich zahlenmäßige Schlüsse von der Porengröße auf die Teilchengröße nicht statthaft sind. Beispielsweise überdecken die beiden Filterpapiere der Firma Schleicher & Schüll, Nr. 589/1 und 589/2 den in Frage kommenden Bereich. Hiervon ist das Papier Nr. 589/2 das dichtere.

Bei Anwendung dieser Filterpapiere zur Messung der Feinverteilung der erfindungsgemäßen Dispersionen zeigt sich für diese das folgende Analysenbild: Auf Filterpapier 589/1 ist der Auslauf meist vollkommen, d. h. die Auftropfstelle läßt sich nicht mehr von der Umgebung unterscheiden, und es ist eine nahezu gleichmäßig gefärbte Kreisfläche entstanden (Dispersionen von farblosen Aminen werden in der Durchsicht beurteilt). Auf Filterpapier 589/2 läßt sich ein solcher ›zonenloser‹ Auslauf nur selten erreichen; meist ist hier ein mehr oder weniger stark augebildetes Zentrum zu beobachten, das von einer schwächeren kreisförmigen Zone umgeben ist. — (Die Beurteilung erfolgt zweckmäßig nach dem Trocknen an der Luft bei Raumtemperatur).

Die erfindungsgemäßen wäßrigen Dispersionen sind sehr beständig. Sie enthalten das primäre aromatische Amin in einer so feinen Verteilung, daß auch bei einer längeren Lagerung keine Absetzung an Amin auftritt. Sie sind außerdem auch bei Konzentrationen von über 50 bis etwa 65 Gew.-% so dünnflüssig, daß sie leicht in ein Färbebad oder in einen Badeansatz eingeführt werden können. Die Dispersionen können vorteilhaft zur Herstellung von Entwicklungsbädern, Klotzflotten oder von Druckpasten für den Basenaufdruck oder für den Aufdruck auf Gewebe, das mit Naphtholverbindungen, die in der Eisfarbentechnik eingesetzt werden, und mit einem Alkalinitrit vorgeklotzt wurde, verwendet werden. Die Diazotierung des in den erfindungsgemäßen Dispersionen vorliegenden primären aromatischen Amins erfolgt in einfacher Weise vorteilhaft durch Vermischen der Dispersion mit der benötigten Menge Natriumnitritlösung und Einrühren in etwa 2 bis 6 gew.-%ige Salzsäure mit einer Temperatur von 20°C oder unterhalb 20°C. Die Diazotierung ist nach etwa einer Minute beendet, und man erhält eine rückstandsfreie Diazoniumsalzlösung. — Die Diazotierung kann aber auch so durchgeführt werden, daß man die Dispersion zuerst nur mit Wasser von 20°C oder unterhalb 20°C verrührt, dann die Salzsäure und schließlich die Nitritlösung hinzugibt. — Eine andere Möglichkeit zur Diazotierung, die ein gleichgutes Ergebnis liefert, besteht darin, in einer Mischung aus Wasser und Salzsäure, vorzugsweise von einer Temperatur von unterhalb 20°C, zuerst die Dispersion des Amins und dann das in Wasser gelöste Alkalinitrit einzurühren.

Als primäre aromatische Amine, die in den erfindungsgemäßen Dispersionen enthalten sind, kommen aromatische Amine in Betracht, die keine Carboxy- und/oder Sulfonsäuregruppen enthalten. Insbesondere sind solche Amine die in der Eisfarbentechnik verwendeten üblichen Verbindungen, die beispielsweise aus Colour Index, 3rd Edition, Vol. 4, C.I.-Nrs. 37 000—37 275, und L. Diserens. Die neuesten Fortschritte in der Anwendung der Farbstoffe, 3. Auflage, 1951, Band 1, Seiten 646—685, bekannt sind. Die primären aromatischen Amine können somit der Benzol-, Azobenzol-, Diphenyl-, Diphenylamin-, Naphthalin- oder Anthracenreihe angehören. Geeignet sind ferner Amine, die einen an einen Benzolring ankondensierten heterocyclischen Ring enthalten, sowie heterocyclische Amine, die sich bei der Diazotierung wie aromatische Amine verhalten.

Bevorzugt sind von den primären aromatischen Aminen, die in den erfindungsgemäßen Dispersionen enthalten sind, die Verbindungen der allgemeinen Formel (2)

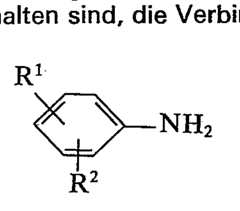

(2)

in welcher $R^1$ ein Wasserstoffatom, Halogenatom, wie Chloratom, eine Alkoxygruppe von 1 bis

6 C-Atomen, wie eine Methoxy- oder Äthoxygruppe, eine Alkylgruppe von 1 bis 6 C-Atomen, wie eine Methyl- oder Äthylgruppe, eine Sulfonsäureamidgruppe, eine Carbonsäureamidgruppe, eine Acylaminogruppe einer niederen aliphatischen oder einer aromatischen Carbonsäure, wie beispielsweise eine Acetylamino-, Propionylamino- oder Benzoylaminogruppe, eine Cyangruppe, eine Phenylaminogruppe oder die Phenylazo- oder Naphthylazogruppe ist, wobei der Phenylazo- und Naphthylazorest noch durch Substituenten aus der Gruppe Nitro, Halogen, wie Chlor, Alkoxy von 1 bis 6 C-Atomen, wie Methoxy und Äthoxy, Alkyl von 1 bis 6 C-Atomen, wie Methyl und Äthyl, Sulfonsäureamid, Carbonsäureamid, Acylamino einer niederen aliphatischen Carbonsäure oder aromatischen Carbonsäure, Cyan, Amino und Phenylamino substituiert sein können, und $R^2$ für ein Wasserstoffatom, ein Halogenatom, wie Chloratom, eine Nitrogruppe, eine Alkoxygruppe von 1 bis 6 C-Atomen, wie eine Methoxy- oder Äthoxygruppe, oder eine Alkylgruppe von 1 bis 6 C-Atomen, wie eine Methylgruppe oder Äthylgruppe, steht.

Das in den erfindungsgemäßen Dispersionen enthaltene wasserlösliche Dispergiermittel kann so hergestellt werden, daß man aromatische Verbindungen, die mit Formaldehyd zu reagieren vermögen, mit wasserlöslichen Anlagerungsprodukten von Alkylenoxiden an aromatischen, Hydroxy- und/oder Carbonsäuregruppen enthaltende Verbindungen und mit Formaldehyd in Gegenwart eines sauren Katalysators kondensiert und die Kondensationsprodukte gegebenenfalls mit einem Alkylierungmittel, wie einem Diallkylsulfat oder einem Alkylenoxid, in an sich bekannter Weise alkyliert bzw. oxalkyliert. Die Herstellung des Dispergiermittels kann auch so erfolgen, daß man die oben erwähnten aromatischen Verbindungen, die mit Formaldehyd zu reagieren vermögen, zunächst mit Formaldehyd vorkondensiert und diese Vorkondensate mit wasserlöslichen Anlagerungsprodukten von Alkylenoxiden an aromatische, Hydroxy- und/oder Carbonsäuregruppen enthaltende Verbindungen in Gegenwart eines sauren Katalysators kondensiert.

Für die Herstellung der erfindungsgemäß verwendeten wasserlöslichen Dispergiermittel kommen als aromatischen Verbindungen, die mit Formaldehyd zu reagieren vermögen, vor allem Verbindungen in Frage, die an dem aromatischen Kern Hydroxygruppen gebunden enthalten, wobei diese Hydroxygruppen, vorzugsweise durch niedere Alkylreste, veräthert sein können; weiterhin kommen solche in Frage, die Anlagerungsprodukte von 2 bis 50 Mol Äthylenoxid an 1 Mol einer aromatischen phenolischen Verbindung darstellen, oder für die Umsetzung mit Formaldehyd geeignete aromatische Kohlenwasserstoffe. Solche aromatischen Verbindungen, die mit Formaldehyd zu reagieren vermögen, sind beispielsweise Phenol, Kresol, Xylenol, Resorcin, Butylphenol, Chlorphenol, Naphthol, Methylnaphthol, 4,4'-Dihydroxydiphenyl, Anisol, ferner Anlagerungsprodukte von 2 bis 50 Mol Äthylenoxid an 1 Mol einer Phenolverbindung sowie die Kohlenwasserstoffe Xylol, Mesitylen und Naphthalin.

Als wasserlösliche Anlagerungsprodukte von Alkylenoxiden an aromatischen, Hydroxy- und/oder Carbonsäuregruppen enthaltende Verbindungen kommen in erster Linie Umsetzungsprodukte von 8 bis 50 Mol Alkylenoxid, vorzugsweise von Äthylenoxid und/oder Propylenoxid, mit einem Mol der aromatischen, Hydroxy- und/oder Carbonsäuregruppen enthaltenden Verbindung in Betracht. Aromatische Verbindungen, die eine oder mehrere Hydroxy- und/oder Carbonsäuregruppen enthalten, sind beispielsweise ein- oder zweiwertige phenolische Verbindungen, wie z. B. Phenol, Kresol, Xylenol, Butylphenol, Chlorphenol, $\alpha$-Naphthol, $\beta$-Naphthol, Resorcin, 2,2'-Dihydroxydiphenylpropan, 4,4'-Dihydroxy-diphenyl und Methylen-di-$\beta$-naphthol.

Die nachfolgenden Beispiele dienen zur Erläuterung der Erfindung. Die dort angegebenen Teile sind Gewichtsteile, die Prozentangaben beziehen sich auf Gewichtsprozente, sofern nicht anders vermerkt. Gewichtsteile stehen im Verhältnis zu Volumenteilchen wie das Kilogramm zum Liter.

## Beispiel 1

135 Teile 4-Chlor-2-nitro-1-aminobenzol, 90 Teile einer etwa 38%igen wäßrigen Lösung eines nachmethylierten Kondensationsproduktes aus 1 Mol Phenol, etwa 1 Mol Phenolpolyglykoläther mit etwa 18 Äthylenoxideinheiten und etwa 2 Mol Formaldehyd, 3 Teile eines sulfogruppenhaltigen Kresol-Formaldehyd-Harzes, 0,5 Teile Pentachlorphenol-Natrium und 71 Teile Wasser werden miteinander verrührt. Anschließend wird das Gemisch in einer schnell-laufenden Rührwerkskugelmühle 30 Minuten lang gemahlen.

## Ausprüfung

Zur Prüfung der Feinverteilung wird 1 Teil der Dispersion mit 33 Teilen destilliertem Wasser verdünnt. Je 1 ml dieser verdünnten Dispersion wird mit einer Pipette auf die Mitte eines Rundfilters mit einem Durchmesser von 11 cm der Firma Schleicher & Schüll der Nr. 589/1 und der Nr. 589/2 gegeben. Nach dem Auslaufen der Probe und Trocknen ist auf dem Filter 589/1 eine nahezu gleichmäßig gefärbte Kreisfläche sichtbar; auf dem Filter Nr. 589/2 ist ein etwas stärker als die Umgebung gefärbter Zentralfleck erkennbar. — Bei einem Vergleichspräparat, das wie oben, jedoch ohne Zugabe des sulfogruppenhaltigen Kresol-Formaldehyd-Harzes als anionenaktives Tensid, hergestellt wurde, bleibt auf den beiden Filtern das gesamte Amin an der Auftragsstelle: Diese ist stark gefärbt, während das übrige

Filter praktisch ungefärbt ist.

Zur Viskositätsprüfung gibt man je eine Probe der beiden Präparationen in ein Wasserbad von 50°C; die Präparation, die das anionaktive Tensid nicht enthält, wird in wenigen Minuten pastenförmig, während die erfindungsgemäße Präparation ihre Viskosität kaum verändert und auch bei 50°C gut gießbar bleibt. — Die Viskosität der in diesem Beispiel hergestellten erfindungsgemäßen Dispersion ist für manche Verwendungszwecke zu niedrig. Man kann sie erhöhen, wenn man ihr 3 Gew.-%eines Polyglykoläthers mit einem durchschnittlichen Molekulargewicht von 20 000 zusetzt. Die Feinverteilung des primären aromatischen Amins in der Dispersion und das Viskositätsverhalten bei erhöhter Temperatur ändern sich hierdurch nicht. — (Die Polyglykolätherzugabe kann auch vor oder während des Feinverteilungsprozesses erfolgen.)

Beispiel 2

Man verfährt zur Herstellung einer erfindungsgemäßen Dispersion wie in Beispiel 1 beschrieben, setzt jedoch anstelle von 3 Teilen des sulfogruppenhaltigen Kresol-Formaldehyd-Harzes alternativ 1 Teil, 1,5 Teile, 2 Teile, 6 Teile, 9 Teile oder 12 Teile dieses Harzes ein und verringert die Wassermenge entsprechend; man erhält erfindungsgemäße Präparationen mit praktisch derselben Feinverteilung des primären aromatischen Amins, wie in Beispiel 1 beschrieben: Auf dem Filter Nr. 589/1 hat sich eine nahezu gleichmäßig gefärbte Kreisfläche ausgebildet, auf dem Filter Nr. 589/2 ist die Aufgabestelle als etwas stärker gefärbtes Zentrum erkennbar.

Beispiel 3

Verfährt man zur Herstellung einer erfindungsgemäßen Dispersion wie in Beispiel 1 beschrieben, setzt jedoch anstelle von 3 Teilen des sulfogruppenhaltigen Kresol-Formaldehyd-Harzes 3 Teile eines Ligninsulfonates mit einem mittleren Molekulargewicht von 14 000 bis 16 000 ein, so erhält man eine Präparation mit praktisch derselben Feinverteilung der Dispersion des Beispieles 1, wie aus den Filterbildern, die mit denen des Beispieles 1 praktisch identisch sind, erkennbar ist. Das Viskositätsverhalten entspricht der Dispersion des Beispieles 1. Eine Viskositätserhöhung der Dispersion durch einen Polyglykoläther ist ohne Einfluß auf die Feinverteilung und das Viskositätsverhalten der Dispersion bei erhöhter Temperatur.

Beispiel 4

Man verfährt zur Herstellung einer erfindungsgemäßen Dispersion wie in Beispiel 1 beschrieben, setzt jedoch anstelle von 3 Teilen des dortigen anionaktiven Tensides 6 Teile des Natriumsalzes einer Naphthalintrisulfonsäure ein und reduziert die Wassermenge entsprechend; man erhält eine Dispersion mit einer Feinverteilung des primären aromatischen Amins, die wesentlich höher ist als eine entsprechende Vergleichsdispersion ohne Verwendung des anionaktiven Tensides, welche der Vergleichsdispersion des Beispiels 1 entspricht. Während in der Vergleichsdispersion, wie in Beispiel 1 angegeben, das gesamte Amin auf der Auftragstelle zurückbleibt, zeigt die Fließtestprobe für die erfindungsgemäße Dispersion dieses Beispieles 4 auf dem Filter Nr. 589/1 einen Auslauf mit geringer Zonenbildung, d. h. ein wenig stärker als die Umgebung gefärbtes Zentrum, und auf dem Filter Nr. 589/2 ein deutlich ausgebildetes Zentrum, das von einer schwächeren kreisförmigen Zone umgeben ist.

Beispiel 5

135 Teile 4-Chlor-2-nitro-1-aminobenzol, 60 Teile einer etwa 38%igen wäßrigen Lösung eines nachmethylierten Kondensationsproduktes aus 1 Mol Phenol, etwa 1 Mol Phenolglykoläther mit etwa 25 Äthylenoxideinheiten und etwa 2,5 Mol Formaldehyd, 12 Teile des Natriumsalzes einer Methylen-bis-naphthalinsulfonsäure, 0,2 Teile Pentachlorphenol-Natrium und 93 Teile Wasser werden gemäß der Verfahrensweise des Beispiels 1 feinverteilt.

Die Fließproben dieser Dispersion zeigen auf dem Filter Nr. 589/1 einen Auslauf ohne Zonenbildung, d. h. eine nahezu gleichförmig gefärbte Kreisfläche, auf dem Filter Nr. 589/2 einen Auslauf mit deutlich erkennbarem Zentrum. — Stellt man in gleicher Weise eine Disperion ohne die Verwendung des anionaktiven Tensides her, so zeigt die Vergleichsprobe bei dem Fließtest keinen Auslauf, d. h. nur einen Zentralfleck, da das gesamte Amin an der Aufgabestelle abfiltriert wird; die Feinverteilung dieser Dispersion ist demnach wesentlich schlechter.

Beispiel 6

Man verfährt zur Herstellung einer erfindungsgemäßen Dispersion wie in Beispiel 1 beschrieben, ersetzt jedoch das anionaktive Tensid durch 9 Teile des Natriumsalzes einer Methylen-bis-naphthalinsulfonsäure. Man erhält eine Dispersion mit — im Vergleich zur erfindungsgemäßen Dispersion des Beispiels 1 — etwa gleicher Feinverteilung und praktisch identischen Fließproben.

Beispiel 7

Man verfährt zur Herstellung einer erfindungsgemäßen Dispersion wie in Beispiel 1 beschrieben, setzt jedoch anstelle des dort genannten anionaktiven Tensides 3 Teile des Natriumsalzes der Dodecylbenzolsulfonsäure ein und gibt zusätzlich Schaumdämpfung 0,45 Teile eines handelsüblichen Siliconentschäumers hinzu und vermindert die Wassermenge entsprechend. Es wird eine Dispersion erhalten, die eine deutlich bessere Feinverteilung zeigt als eine in gleicher Weise, jedoch ohne Zusatz des anionaktiven Tensides hergestellte Dispersion. Während die tensidfreie Dispersion entsprechend der des Beispieles 1 das gesamte primäre aromatische Amin auf der Auftragsstelle des Filters zurückläßt, zeigt die erfindungsgemäße Dispersion dieses Beispieles 7 auf dem Filter Nr. 589/1 eine sehr geringe Zonenbildung, d. h. ein nur schwach ausgebildetes Zentrum in einer sonst nahezu gleichmäßig gefärbten Fläche, auf dem Filter Nr. 589/2 neben einer Kernzone eine geringe Auslaufzone.

Beispiel 8

Man verfährt zur Herstellung der erfindungsgemäßen Dispersion wie in Beispiel 1 beschrieben, ersetzt jedoch das dortige anionaktive Tensid durch 3 Teile des Natriumsalzes der Dibutyl-naphthalinsulfonsäure und gibt zusätzlich zur Schaumdämpfung 0,5 Teile einer 50%igen Lösung von Tri-isobutylphosphat in Isobutanol hinzu. Man erhält eine Dispersion, die bezüglich der Feinverteilung und des Viskositätsverhaltens der erfindungsgemäßen Dispersion des Beispiels 1 entspricht.

Beispiel 9

4500 g 5-Chlor-2-amino-1,4-dimethoxy-benzol, 2500 g einer etwa 40%igen wäßrigen Lösung eines nachmethylierten Kondensationsproduktes aus 1 Mol Phenol, etwa 1 Mol Phenolpolyglykoläther mit etwa 16 Äthylenoxideinheiten und etwa 1,5 Mol Formaldehyd, 100 g eines sulfogruppenhaltigen Kresol-Formaldehyd-Harzes, 600 g Äthylenglykol, 20 g Pentachlorphenol-Natrium und 700 g Wasser werden miteinander gut vermischt und anschließend durch eine Rührwerksmühle mit einem Durchsatz von etwa 5 kg/h unter fünfmaliger Wiederholung gepumpt.

Bei der so hergestellten Dispersion wird die Prüfung der Feinverteilung gemäß dem Beispiel 1 vorgenommen. Auf dem Filter Nr. 589/1 sind keinerlei Zonen erkennbar, d. h. der Auslauf erfolgt völlig gleichmäßig. Auf dem Filter Nr. 589/2 ist die Auftragstelle als Zentralfleck noch erkennbar. — Bei der Herstellung einer Vergleichsdispersion, jedoch ohne Verwendung eines anionaktiven Tensides, zeigt der Fließtest auf dem Filter Nr. 589/1 eine starke Zonenbildung, und auf dem Filter Nr. 589/2 sitzt praktisch der gesamte Feststoff an der Auftragstelle.

Als Rührwerkskugelmühle in diesem oder in den anderen Beispielen kann eine solche mit einem Mahltopfinhalt 1 bis 1,5 l verwendet werden, die mit 1 bis 2 kg Siliquarzitperlen von 1 bis 3 mm Durchmesser beschickt ist. Die Umfangsgeschwindigkeit der Scheiben, die Perlen und Mahlgut bewegen, sollte etwa 8 m/s betragen.

Gibt man die erfindungsgemäße Dispersion und die Vergleichsdispersion ohne anionaktives Tensid in einem Gefäß in ein Wasserbad von 50°C, so nimmt die Dispersion ohne Tensid eine pastenförmige Konsistenz an, während die erfindungsgemäße Dispersion weiterhin bei dieser Temperatur gut gießbar bleibt.

Beispiel 10

135 Teile 2-Amino-1-methoxy-benzol-4-sulfonsäurediäthylamid, 60 Teile einer etwa 38%igen wäßrigen Lösung eines nachmethylierten Kondensationsproduktes aus 1 Mol Phenol, etwa 1 Mol Phenolpolyglykoläther mit etwa 20 Äthylenoxideinheiten und etwa 2 Mol Formaldehyd, 6 Teile eines sulfogruppenhaltigen Kresol-Formaldehyd-Harzes als anionenaktives Tensid, 30 Teile Äthylenglykol, 0,5 Teile Pentachlorphenol-Natrium und 75 Teile Wasser werden miteinander vermischt und 30 Minuten lang gemäß Beispiel 1 zur Feinverteilung vermahlen.

Diese erfindungsgemäße Dispersion zeigt im Fließtest auf dem Filter Nr. 589/1 einen völlig gleichmäßigen Auslauf, auf dem Filter Nr. 589/2 einen geringen Auslauf mit starker Innenzone. — Hingegen zeigt eine Dispersion entsprechend der hier hergestellten erfindungsgemäßen Dispersion ohne anionaktives Tensid überhaupt keinen Auslauf des Amins an der Auffließstelle entsprechend der Vergleichsprobe des Beispiels 1.

In der erfindungsgemäßen Dispersion kann das Äthylenglykol durch die gleiche Menge Glycerin ersetzt werden, ohne die Feinverteilung zu verändern.

## Beispiel 11

142 Teile 5-Nitro-2-amino-1-methoxy-benzol, 56 Teile einer etwa 38%igen wäßrigen Lösung eines nachmethylierten Kondensationsproduktes aus 1 Mol Phenol, etwa 1 Mol Phenolpolyglykoläther mit etwa 20 Äthylenoxideinheiten und etwa 2 Mol Formaldehyd, 3 Teile eines sulfogruppenhaltigen Kresol-Formaldehyd-Harzes, 50 Teile Äthylenglykol, 0,5 Teile Pentachlorphenol-Natrium und 52 Teile Wasser werden miteinander vermischt und gemäß Beispiel 1 feinverteilt.

Die so erhaltene erfindungsgemäße Dispersion zeigt bei der Fließprobe auf dem Filter Nr. 589/1 einen zonenlosen Auslauf, auf dem Filter Nr. 589/2 ist ein starker Zentralfleck erkennbar, der von einer schwächeren kreisförmigen Zone umgeben ist. — Bei einer in gleicher Weise, jedoch ohne anionaktives Tensid hergestellten Vergleichsdispersion zeigt die Fließprobe das Verhalten der Vergleichsprobe des Beispiels 1.

Ersetzt man in der erfindungsgemäßen Dispersion das Dispergiermittel durch das äquivalente nachäthylierte Kondensationsprodukt, so erhält man eine Dispersion gleicher Qualität und Eigenschaften.

## Beispiel 12

150 Teile 4-Chlor-2-nitroanilin, 90 Teile einer etwa 38%igen wäßrigen Lösung eines nachmethylierten Kondensationsproduktes aus 2 Mol Phenol, etwa 1 Mol Phenolpolyglykoläther mit etwa 22 Äthylenoxideinheiten und etwa 3 Mol Formaldehyd, 12 Teile einer 22%igen Lösung eines Polyvinylacetalsulfonats als anionaktives Tensid, 40 Teile Äthylenglykol und 23 Teile Wasser werden gemäß Beispiel 1 feinverteilt.

Die erhaltene Dispersion zeigt bei dem Fließtest auf dem Filter Nr. 589/1 einen vollständigen Auslauf ohne Zone. — Eine in gleicher Weise hergestellte Vergleichsdispersion ohne Verwendung des anionaktiven Tensids ergibt eine Dispersion, die auf dem Filter Nr. 589/1 keinen Auslauf mit Zurückhaltung des Amins an der Auffließstelle entsprechend dem Verhalten der Vergleichsprobe des Beispiels 1 zeigt.

## Beispiel 13

Man verfährt wie im Beispiel 1, verwendet aber anstelle von 4-Chlor-2-nitro-1-aminobenzol 5-Nitro-2-amino-1-methylbenzol. Man erhält eine Dispersion, deren Feinverteilung deutlich besser ist als eine entsprechende Vergleichsdispersion gemäß der deutschen Offenlegungsschrift 2 314 938, die ohne Zusatz eines sulfogruppenhaltigen Kresol-Formaldehyd-Harzes als anionaktives Tensid hergestellt wurde.

## Beispiel 14

135 Teile 4-Amino-2',3-dimethyl-azobenzol, 45 Teile einer etwa 60%igen wäßrigen Lösung eines nachmethylierten Kondensationsproduktes aus 1 Mol Phenol, 0,9 bis 1,1 Mol Phenolpolyglykoläther mit 18 bis 22 Äthylenoxideinheiten und 1,9 bis 2,2 Mol Formaldehyd, 3 Teile eines sulfogruppenhaltigen Kresol-Formaldehyd-Harzes, 0,2 Teile Pentachlorphenol-Natrium, 26 Teile Monoäthylenglykol und 90 Teile Wasser werden gut vermischt. Anschließend wird, wie im Beispiel 1 beschrieben, die Feinverteilung vorgenommen.

Die erhaltene Dispersion bleibt beim Erwärmen auf 50°C noch gießbar, während eine ohne das sulfogruppenhaltige Kresol-Formaldehyd-Harz als anionaktives Tensid hergestellte Dispersion unter diesen Bedingungen pastenförmig wird.

## Beispiel 14a

Mit gleich gutem Ergebnis erhält man Dispersionen entsprechend dem Beispiel 14, wenn man anstelle des dort verwendeten aromatischen Amins 4'-Nitro-4-amino-2,5-dimethoxy-azobenzol oder 4,4'-diamino-3-methoxy-6-methyl-azobenzol oder 2'-Chlor-4-amino-2,5-dimethoxy-azobenzol einsetzt.

## Beispiel 15

Man arbeitet wie im Beispiel 1 angegeben, verringert aber die Wassermenge von 71 Teilen auf 28 Teile. Die so erhaltene Dispersion mit dem höheren Gehalt an aromatischem Amin besitzt den gleichen Feinverteilungsgrad wie im Beispiel 1 angegeben.

Beispiel 15 a

Eine Dispersion mit einem geringeren Gehalt an dem aromatischen Amin entsprechend Beispiel 1 kann ebenfalls leicht erhalten werden, wenn man wie im Beispiel 1 arbeitet, jedoch die Wassermenge von 71 Teilen auf beispielsweise 177 Teile Wasser erhöht. Die Dispersion besitzt ebenfalls ein gutes Viskositätsverhalten und zeigt einen hohen Feinverteilungsgrad des dispergierten aromatischen Amins.

Beispiel 16

141 Teile 4-Chlor-2-nitro-1-aminobenzol, 12 Teile einer etwa 38%igen wäßrigen Lösung eines nachmethylierten Kondensationsproduktes aus 1 Mol Phenol, 0,9 bis 1,1 Mol Phenolpolyglykoläther mit 14 bis 18 Äthylenoxideinheiten und 1,9 bis 2,2 Mol Formaldehyd, 3 Teile eines sulfogruppenhaltigen Kresol-Formaldehyd-Harzes als anionaktives Tensid, 0,1 Teile eines handelsüblichen Fungizids und 144 Teile Wasser werden gut miteinander vermischt. Anschließend wird in einer schnell laufenden Rührwerkskugelmühle gemahlen.

Man erhält eine Dispersion, die eine deutlich bessere Feinverteilung als ein entsprechendes Vergleichspräparat gemäß der deutschen Offenlegungsschrift 2 314 938, das ohne das sulfogruppenhaltige Kresol-Formaldehyd-Harz hergestellt wurde, zeigt.

Die Viskosität der in diesem Beispiel hergestellten erfindungsgemäßen Dispersion ist für manche Verwendungszwecke zu niedrig. Man kann sie erhöhen, wenn man ihr etwa 5 Gew.-% eines Polyglykoläthers mit einem durchschnittlichen Molekulargewicht von 20 000 zusetzt. Die Feinverteilung des primären aromatischen Amins in der Dispersion und das Viskositätsverhalten bei erhöhter Temperatur ändern sich hierdurch nicht. — (Die Polyglykolätherzugabe kann auch vor oder während des Feinverteilungsprozesses erfolgen.)

**Patentansprüche**

1. Wäßrige Dispersionen von primären, keine Carbonsäure- oder Sulfonsäuregruppen enthaltenden aromatischen Aminen mit dem Gehalt eines wasserlöslichen Kondensationsproduktes als Dispergiermittel, das einen oder mehrere Reste von oxalkylierten hydroxy- und/oder carboxyhaltigen aromatischen Verbindungen besitzt, wobei diese oxalkylierten aromatischen Reste durch Methylenbrücken direkt oder unter Zwischenschaltung von Resten aromatischer Verbindungen miteinander verbunden sind, und gegebenenfalls mit dem Gehalt eines mehrwertigen Alkohols, dadurch gekennzeichnet, daß sie ein anionaktives Tensid und gegebenenfalls ein hochmolekulares Polyglykol enthalten.

2. Wäßrige Dispersionen nach Anspruch 1, dadurch gekennzeichnet, daß das aromatische Amin eine Verbindung der allgemeinen Formel (2)

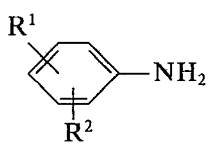

(2)

in welcher $R^1$ ein Wasserstoffatom, ein Halogenatom, eine Alkoxygruppe von 1 bis 6 C-Atomen, eine Alkylgruppe von 1 bis 6 C-Atomen, eine Sulfonsäureamidgruppe, eine Carbonsäureamidgruppe, eine Acylaminogruppe einer niederen aliphatischen oder einer aromatischen Carbonsäure, eine Cyangruppe, eine Phenylaminogruppe oder die Phenylazo- oder Naphthylazogruppe ist, wobei der Phenylazo- und Naphthylazorest noch durch Substituenten aus der Gruppe Nitro, Halogen, Alkoxy von 1 bis 6 C-Atomen, Alkyl von 1 bis 6 C-Atomen, Sulfonsäureamid, Carbonsäureamid, Acylamino einer niederen aliphatischen Carbonsäure oder aromatischen Carbonsäure, Cyan, Amino und Phenylamino substituiert sein können, und $R^2$ ein Wasserstoffatom, ein Halogenatom, eine Nitrogruppe, eine Alkoxygruppe von 1 bis 6 C-Atomen oder eine Alkylgruppe von 1 bis 6 C-Atomen ist.

3. Wäßrige Dispersionen nach Anspruch 1 oder 2, dadurch gekennzeichnet, daß das Dispergiermittel ein Kondensationsprodukt ist, das (1) aus einer phenolischen, ggf. verätherten, aromatischen Verbindung oder aus einem mit Formaldehyd umsetzbaren aromatischen Kohlenwasserstoff mit (2) Formaldehyd und (3) einem wasserlöslichen Anlagerungsprodukt von 8 bis 50 Mol Alkylenoxid an 1 Mol einer aromatischen, phenolische Hydroxygruppen enthaltenden Verbindung in Gegenwart eines sauren Katalysators und gegebenenfalls nachfolgender Alkylierung erhalten wird.

4. Wäßrige Dispersionen nach Anspruch 3, dadurch gekennzeichnet, daß das Dispergiermittel ein Kondensationsprodukt aus einer Phenol-Verbindung, Phenolpolyglykoläther und Formaldehyd ist.

5. Wäßrige Dispersionen nach Anspruch 4, dadurch gekennzeichnet, daß freie Hydroxygruppen des Kondensationsproduktes aus einem Phenol, Phenolpolyglykoläther und Formaldehyd ganz oder teilweise alkyliert sind.

6. Wäßrige Dispersionen nach Anspruch 5, dadurch gekennzeichnet, daß die phenolischen Reste des Kondensationsproduktes durch eine Methyl- oder eine Äthylgruppe substituiert sind.

7. Wäßrige Dispersionen nach einem der Ansprüche 1 bis 6, dadurch gekennzeichnet, daß das anionaktive Tensid zwei oder mehr Sulfogruppen im Molekül besitzt.

8. Wäßrige Dispersionen nach einem der Ansprüche 1 bis 7, dadurch gekennzeichnet, daß das anionaktive Tensid ein Ligninsulfonat oder ein sulfogruppenhaltiges Phenol- oder Kresol-Formaldehyd-Harz ist.

9. Wäßrige Dispersionen nach einem der Ansprüche 1 bis 8, dadurch gekennzeichnet, daß das Polyglykol ein Polyäthylenglykol mit einem Molekulargewicht von 4000 bis 100 000 ist.

10. Verwendung eines anionaktiven Tensids zur Herstellung von feinverteilten wäßrigen Dispersionen von primären, keine Carbonsäure- oder Sulfonsäuregruppen enthaltenden aromatischen Aminen mit dem Gehalt eines wasserlöslichen Kondensationsproduktes als Dispergiermittel, das einen oder mehrere Reste von oxalkylierten hydroxy- und/oder carboxyhaltigen aromatischen Verbindungen besitzt, wobei diese oxalkylierten aromatischen Reste durch Methylenbrücken direkt oder unter Zwischenschaltung von Resten aromatischer Verbindungen miteinander verbunden sind, und gegebenenfalls mit dem Gehalt eines mehrwertigen Alkohols und gegebenenfalls eines hochmolekularen Polyglykols.

11. Verwendung der Dispersion gemäß Anspruch 1 zur Erzeugung von wasserunlöslichen Azofarbstoffen auf der Faser.

**Claims**

1. Aqueous dispersions of primary aromatic amines not containing carboxylic or sulfonic acid groups, with the content of a water-soluble condensation product as a dispersing agent which contains one or several radicals of oxalkylated hydroxy- and/or carboxy-containing aromatic compounds, these oxalkylated aromatic radicals being linked with one another by methylene bridges either directly or via radicals of aromatic compounds, and optionally with the content of a polyvalent alcohol, the dispersions being characterized in that they contain an anionic-active surfactant and optionally a high-molecular polyglycol.

2. Aqueous dispersions according to claim 1, characterized in that the aromatic amine is a compound of the general formula (2)

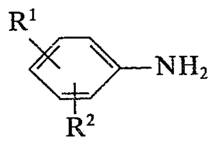
(2)

in which $R^1$ is a hydrogen atom, a halogen atom, an alkoxys group of 1 to 6 C-atoms, an alkyl group of 1 to 6 C-atoms, a sulfonic acid amide group, a carboxylic acid amide group, an acylamino group of a lower aliphatic or an aromatic carboxylic acid, a cyano group, a phenylamino group or the phenylazo- or naphthylazo group, these phenylazo- and naphthylazo radicals may be substituted by substituents of the group nitro, halogen, alkoxy of 1 to 6 C-atoms, alkyl of 1 to 6 C-atoms, sulfonic acid amide, carboxylic acid amide, acylamino of a lower aliphatic carboxylic acid or aromatic carboxylic acid, cyano, amino and phenylamino, and $R^2$ is a hydrogen atom, a halogen atom, a nitro group, an alkoxy group of 1 to 6 C-atoms or an alkyl group of 1 to 6 C-atoms.

3. Aqueous dispersions according to claim 1 or 2, characterized in that the dispersing agent ist a condensation product which is obtained by reaction of (1) a phenolic, optionally etherified, aromatic compound or an aromatic hydrocarbon capable of reacting with formaldehyde, with (2) formaldehyde and (3) a water-soluble addition product of 8 to 50 mols of alkylene oxide on 1 mol of an aromatic, phenolic hydroxy groups-containing compound in the presence of an acidic catalyst, and optionally with subsequent alkylation reaction.

4. Aqueous dispersions according to claim 3, characterized in that the dispersing agent is a condensation product of a phenol-compound, of a phenolpolyglycol ether and of formaldehyde.

5. Aqueous dispersions according to claim 4, characterized in that free hydroxy groups of the condensation product of a phenol, phenol polyglycol ether and formaldehyde have been alkylated wholly or partially.

6. Aqueous dispersions according to claim 5, characterized in that the phenolic radicals of the condensation product are substituted by a methyl or an ethyl group.

7. Aqueous dispersions according to one of claims 1 to 6, characterized in that the anionic-active surfactant contains two or several sulfo groups in the molecule.

8. Aqueous dispersions according to one of claims 1 to 7, characterized in that the anionic-active surfactant is a lignin sulfonate or a sulfo groups-containing phenol- or cresol-formaldehyde-resin.

9. Aqueous dispersions according to one of claims 1 to 8, characterized in that the polyglycol is a polyethylene glycol having a molecular weight of 4,000 to 100,000.

10. Use of an anionic-active surfactant for the preparation of an aqueous dispersion of a high fineness of primary aromatic amines not containing carboxylic or sulfonic acid groups, with the content of a water-soluble condensation product as a dispersing agent which contains one or several radicals of oxalkylated hydroxy- and/or carboxy-containing aromatic compounds, these oxalkylated aromatic radicals being linked with one another by methylene bridges either directly or via radicals of atomatic compounds, and optionally with the content of a polyvalent alcohol and optionally of a high-molecular polyglycol.

11. Use of dispersions defined in claim 1 for the preparation of water-insoluble azo dyestuffs on the fibre.

**Revendications**

1. Dispersions aqueuses d'amines aromatiques primaires, ne contenant aucun groupe acide carboxylique ou acide sulfonique, contenant comme agent de dispersion un produit hydrosoluble de condensation possédant un ou plusieurs restes de composés aromatiques contenant des groupes hydroxyles et/ou carboxyles alcoxylés, ces restes aromatiques alcoxylés étant reliés les uns aux autres directement par des ponts méthylènes ou avec interposition de restes de composés aromatiques, les dispersions contenant éventuellement un polyalcool et étant caractérisées en ce qu'elles contiennent un surfactif à anions actifs et éventuellement un polyglycol à poids moléculaire élevé.

2. Dispersions aqueuses selon la revendication 1, caractérisées en ce que l'amine aromatique est un composé de formule générale (II):

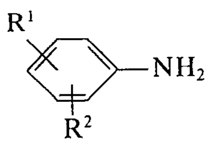

(II)

dans laquelle $R^1$ représente un atome d'hydrogène, un atome d'halogène, un groupe alcoxy ayant 1 à 6 atomes de carbone, un groupe alkyle ayant 1 à 6 atomes de carbone, un groupe sulfonamide, un groupe carboxamide, un groupe acylamino dérivant d'un acide carboxylique aliphatique inférieur ou d'un acide carboxylique aromatique, un groupe cyano, un groupe phénylamino ou le groupe phénylazo ou naphtylazo (le radical phénylazo et le radical naphtylazo pouvant encore être substitués par des substituants choisis parmi l'ensemble formé par un groupe nitro, un atome d'halogène, un groupe alcoxy ayant 1 à 6 atomes de carbone, alkyle ayant 1 à 6 atomes de carbone, sulfonamide, carboxamide, acylamino dérivant d'un acide carboxylique aliphatique inférieur ou d'un acide carboxylique aromatique, cyano, amino et phénylamino), et $R^2$ représente un atome d'hydrogène, un atome d'halogène, un groupe nitro, un groupe alcoxy ayant 1 à t atomes de carbone ou un groupe alkyle ayant 1 à 6 atomes de carbone.

3. Dispersions aqueuses selon la revendication 1 ou 2, caractérisées en ce que l'agent de dispersion est un produit de condensation qui a été obtenu (1) à partir d'un composé aromatique phénolique éventuellement éthérifié ou à partir d'un hydrocarbure aromatique pouvant réagir avec du formaldéhyde, avec (2) du formaldéhyde et (3) un produit hydrosoluble d'addition de 8 à 50 moles d'oxyde d'alkylène sur 1 mole d'un composé aromatique contenant des groupes hydroxyles phénoliques en présence d'un catalyseur acide et, éventuellement, avec une alkylation subséquente.

4. Dispersions aqueuses selon la revendication 3, caractérisées en ce que l'agent de dispersion est un produit de condensation d'un composé phénolique, d'un éther polyglycolique de phénol et du formaldéhyde.

5. Dispersions aqueuses selon la revendication 4, caractérisées en ce que les groupes hydroxyles libres du produit de condensation d'un phénol, d'un éther polyglycolique de phénol et du formaldéhyde sont entièrement ou partiellement alkylés.

6. Dispersions aqueuses selon la revendication 5, caractérisées en ce que les radicaux phénoliques du produit de condensation portent comme substituant un groupe méthyle ou un groupe éthyle.

7. Dispersions aqueuses selon l'une quelconque des revendications 1 à 6, caractérisées en ce que le surfactif à anions actifs possède dans sa molécule deux ou plusieurs groupes sulfo.

8. Dispersions aqueuses selon l'une quelconque des revendications 1 à 7, caractérisées en ce que le surfactif à anions actifs est un lignine-sulfonate ou une résine phénol ou crésol/formaldéhyde contenant des groupes sulfo.

9. Dispersions aqueuses selon l'une quelconque des revendications 1 à 8, caractérisées en ce que le polyglycol est un polyéthylène-glycol présentant un poids moléculaire compris entre 4000 et 100 000.

10. Utilisation d'un surfactif à anions actifs pour la préparation de dispersions aqueuses, à fine répartition, d'amines aromatiques primaires ne contenant pas de groupes acides carboxyliques ou acides sulfoniques, ces dispersions contenant, comme agent de dispersion, un produit hydrosoluble de condensation qui possède un ou plusieurs restes de composés aromatiques contenant des groupes hydroxyles et/ou carboxyles alcoxylés, ces restes aromatiques alcoxylés étant reliés les uns aux autres directement

par des ponts méthylènes ou avec interposition de restes de composés aromatiques, les dispersions contenant éventuellement un polyalcool et éventuellement un polyglycol à poids moléculaire élevé.

11. Utilisation des dispersions selon la revendication 1 pour la production, sur les fibres, de colorants azoïques insolubles dans l'eau.